# FASCICULE DE BREVET EUROPEEN

(11) **EP 3 004 613 B1**
(45) Date de publication et mention de la délivrance du brevet: **17.10.2018**
(21) Numéro de dépôt: 14737281.7
(22) Date de dépôt: 28.05.2014
(51) Int. Cl.: F02K 1/72, F02K 3/06, F02K 1/70, F02K 1/62, F02K 1/60

(54) **NACELLE DE TURBORÉACTEUR COMPORTANT UN DISPOSITIF D'INVERSION DE POUSSÉ À PORTES, COMPRENANT DES FLANCS INTÉRIEURS SUR LES CÔTÉS DE L'OUVERTURE**
TURBOSTRAHL-TRIEBWERKSGONDEL MIT EINER SCHUBUMKEHRVORRICHTUNG VORRICHTUNG MIT TÜREN, MIT INNEREN FLANKEN AN DEN SEITEN DER ÖFFNUNG
TURBOJET ENGINE NACELLE COMPRISING A THRUST REVERSING DEVICE WITH DOORS, COMPRISING INNER FLANKS ON THE SIDES OF THE OPENING

(30) Priorité: 29.05.2013 FR 1354878
(43) Date de publication de la demande: 13.04.2016
(73) Titulaire: Safran Nacelles, 76700 Gonfreville-l'Orcher (FR)
(72) Inventeur: PASCAL, Sébastien Laurent Marie, F-76133 Epouville (FR); BRETON, Alexandre, F-78000 Versailles (FR)
(74) Mandataire: Gaillarde, Frédéric F. Ch.
(86) Numéro de dépôt international: PCT/FR2014/051279
(87) Numéro de publication internationale: WO 2014/191696

(56) Documents cités:
- EP-A1- 0 301 939
- EP-A1- 0 574 730
- FR-A1- 2 526 872
- FR-A1- 2 813 103
- GB-A- 2 287 920
- US-A- 3 874 620
- US-A1- 2010 064 659

## Description

La présente invention concerne une nacelle de turboréacteur d'aéronef, comportant un dispositif d'inversion de poussée à portes.

Les ensembles de motorisation pour les aéronefs comportent généralement une nacelle formant une enveloppe extérieure globalement tubulaire, comprenant à l'intérieur un turboréacteur disposé suivant l'axe longitudinal de cette nacelle.

Le turboréacteur reçoit de l'air frais venant du côté amont ou avant, et rejette du côté aval ou arrière les gaz chauds issus de la combustion du carburant, qui donnent une certaine poussée. Pour les turboréacteurs à double flux, des aubes de soufflante disposées autour du turboréacteur génèrent un flux secondaire important d'air froid le long d'une veine annulaire passant entre le moteur et la nacelle, qui ajoute une poussée élevée.

Pour réaliser un freinage de l'aéronef, un type de nacelle connu, présenté notamment par les documents FR-A1-2813103 et WO-A1-2008/142243, comporte à l'arrière de la nacelle des portes qui basculent dans une position ouverte afin de fermer en grande partie le passage du flux d'air vers l'arrière. Les portes dévient alors ce flux radialement vers l'extérieur en passant par des ouvertures transversales de contre-poussée ouvertes par leur déploiement, afin de le refouler vers l'avant en générant une poussée inversée.

Chaque porte basculant autour d'un axe transversal disposé vers l'arrière, a son côté avant qui se soulève vers l'extérieur de la nacelle afin de présenter sa surface intérieure face au flux. Ce flux est d'abord dévié par cette surface intérieure qui se termine à l'extrémité avant par un déflecteur comprenant un becquet formant un angle sensiblement droit, afin de réaliser une seconde déviation du flux d'air permettant de le projeter le plus possible vers l'avant pour obtenir une bonne efficacité de freinage.

De plus le débit d'air par les portes ouvertes lors de l'inversion de poussée, doit être suffisant pour ne pas endommager le turboréacteur.

Par ailleurs quand la porte est fermée, ses surfaces intérieures doivent former pour la veine annulaire d'air froid la meilleure continuité aérodynamique possible afin de faciliter l'écoulement de ce flux vers l'arrière, pour donner au turboréacteur le meilleur rendement de propulsion.

Pour cela, le document WO-A1-2008/142243 présente un becquet d'extrémité avant de la porte, comprenant une orientation sensiblement radiale quand la porte est fermée, qui dispose d'un mécanisme réalisant un repli pour l'escamoter dans cette porte et libérer le passage. Toutefois ce mécanisme ajoute une complexité, et peut causer des défaillances.

De plus ces documents ne présentent pas de solution pour couvrir les côtés de la cavité de la porte disposés en dehors de l'ouverture de contre-poussée, afin d'améliorer le flux direct quand la porte est fermée, et pour faciliter la déviation du flux sur les côtés de cette ouverture quand la porte est ouverte.

La présente invention a notamment pour but d'éviter ces inconvénients de la technique antérieure.

Elle propose à cet effet une nacelle de turboréacteur selon la revendication 1 comportant un dispositif d'inversion de poussée comprenant des portes qui basculent pour freiner le flux de gaz direct en le guidant au travers d'ouvertures de contre-poussée afin de renvoyer ce flux vers l'avant, l'intérieur de chaque porte comprenant à l'avant une cavité recevant un becquet tourné vers l'avant quand cette porte est ouverte, la structure fixe en amont de chaque porte supportant un bord de déviation qui recouvre en partie la cavité, remarquable en ce que la structure fixe supporte de chaque côté de l'ouverture de contre-poussée, un flanc disposé dans la continuation du bord de déviation et se prolongeant en arrière de la cavité, qui est intégré dans une feuillure de la porte.

Un avantage de cette nacelle de turboréacteur est que les flancs constituent des moyens simples, efficaces et économiques pour à la fois améliorer le passage du flux direct en recouvrant la cavité sur les côtés des ouvertures de contre-poussée, et améliorer le passage du flux inversé en guidant les gaz sur ces côtés de ces ouvertures.

On optimise ainsi à la fois les rendements pour la poussée jet direct vers l'arrière en fonctionnement normal, et pour la contre-poussée due au jet inversé en freinage.

La nacelle de turboréacteur selon l'invention peut comporter de plus une ou plusieurs des caractéristiques suivantes, qui peuvent être combinées entre elles.

Avantageusement, les faces intérieures des flancs sont disposées sensiblement suivant la surface théorique continue de la veine de flux direct qui donne un bon profilage aérodynamique, ce qui permet d'assurer un bon rendement pour ce flux.

En particulier suivant l'axe longitudinal de la nacelle, la longueur du flanc peut représenter environ deux fois la largeur de la cavité.

Avantageusement, la cavité comporte un fond droit qui en partant de l'arrière, s'écarte de la surface théorique continue radialement vers l'extérieur suivant un petit angle, ce qui permet d'assurer un bon guidage du flux en inversion de poussée.

En particulier, ce petit angle peut être compris entre 10 et 20°.

Avantageusement, le bord de déviation comporte une courbure tournée radialement vers l'extérieur, dont le profil dans un plan axial comprend sensiblement une portion d'ellipse, afin de réaliser un bon compromis entre le guidage du flux direct, et la sortie du flux inversé par l'ouverture de contre-poussée permettant un grand débit.

En particulier, le rapport du petit rayon sur le grand rayon de l'ellipse peut être compris entre 0,28 et 0,35.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue de dessus de la partie arrière d'une nacelle selon l'invention, comprenant une porte supérieure ouverte ;
- la figure 2 est une vue de côté de la partie supérieure de cette nacelle;
- la figure 3 est une vue de dessous présentant la porte fermée et la structure fixe qui se trouve en avant ;
- la figure 4 est une demi-coupe longitudinale suivant le plan de coupe vertical IV-IV, montrant la porte fermée et la structure fixe en avant de cette porte ;
- la figure 5 est une demi-coupe longitudinale suivant le plan de coupe incliné V-V, montrant la porte fermée et la structure fixe en avant de cette porte ;
- la figure 6 est une demi-coupe transversale suivant le plan de coupe VI-VI, passant par la cavité, la porte étant fermée ; et
- la figure 7 est une demi-coupe transversale suivant le plan de coupe VII-VII, passant en arrière de la cavité, la porte étant aussi fermée.

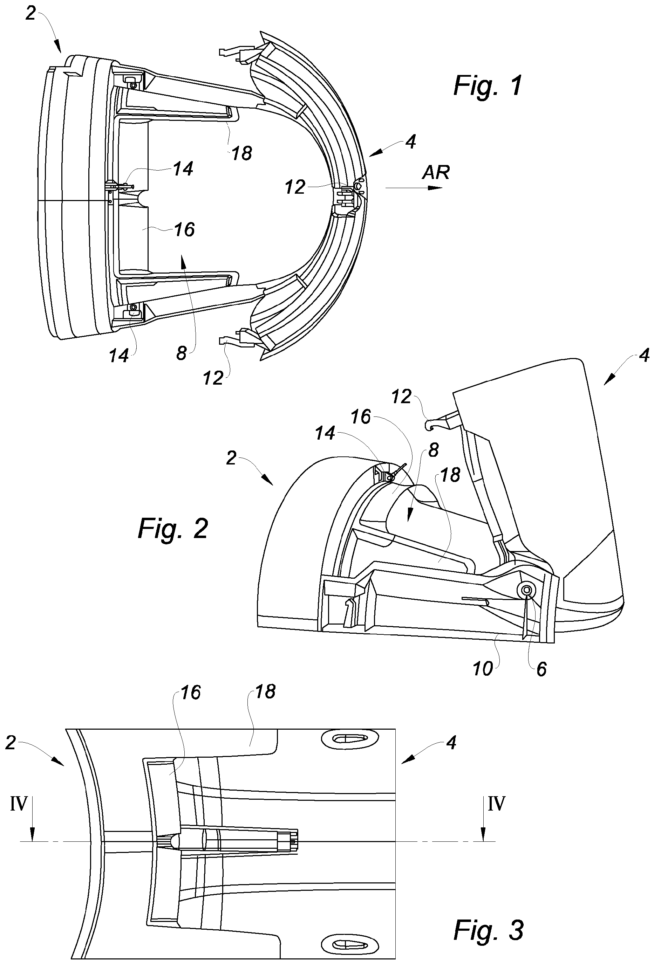

Les figures 1 à 3 présentent une structure circulaire fixe 2 se trouvant à l'arrière d'une nacelle prévue pour recevoir un turboréacteur disposé suivant un axe principal, qui rejette pour la propulsion de l'aéronef un flux de gaz vers l'arrière indiqué par la flèche « AR ».

La structure fixe 2 est symétrique suivant un plan de symétrie passant par l'axe, qui est présenté dans les différentes figures comme étant horizontal. Dans l'aéronef, ce plan peut avoir une inclinaison quelconque.

Chaque côté de la structure circulaire fixe 2 comporte un bras latéral 10 s'étendant vers l'arrière, supportant à son extrémité dans la partie supérieure un pivot transversal 6 fixant la partie arrière d'un capot 4.

Le capot 4 peut basculer autour de ses deux pivots transversaux 6 en soulevant sa partie avant, comme présenté figure 1 et 2, pour d'une part sensiblement fermer le flux de gaz venant du turboréacteur et de la veine annulaire l'entourant, et d'autre part dévier ce flux vers le haut en passant par une ouverture transversale de contre-poussée 8 dégagée par ce basculement, pour le renvoyer au moins en partie vers l'avant.

L'avant du capot 4 comporte au centre et de chaque côté un crochet 12 venant se fixer dans un verrou 14 lié à la structure circulaire 2, quand ce capot est fermé.

Les capots 4 étant fermés, la veine annulaire comporte une forme extérieure donnée par la surface interne de la structure circulaire 2, qui se prolonge par les surfaces internes de ces capots, comprenant un profilage aérodynamique. Un bord de déviation 16 prolonge la partie arrière de la structure circulaire 2, en s'avançant dans l'ouverture de contre-poussée 8.

La structure circulaire fixe 2 supporte de chaque côté de l'ouverture de contre-poussée 8, un flanc 18 disposé dans la continuation du bord de déviation 16. Chaque flanc 18 se prolonge vers l'arrière, à l'intérieur du bras latéral 10. Le capot 4 étant fermé, chaque bord de ce capot vient s'ajuster entre le flanc 18 et le bras latéral 10.

Pour la nacelle suivant l'invention, les formes des bords de déviation 16 et des flancs 18 sont optimisées afin d'obtenir un compromis donnant des rendements assez bons à la fois pour l'écoulement direct des gaz assurant la propulsion de l'aéronef, et pour l'écoulement inverse assurant son freinage, tout en permettant dans ce cas un débit suffisant afin de ne pas endommager le turboréacteur.

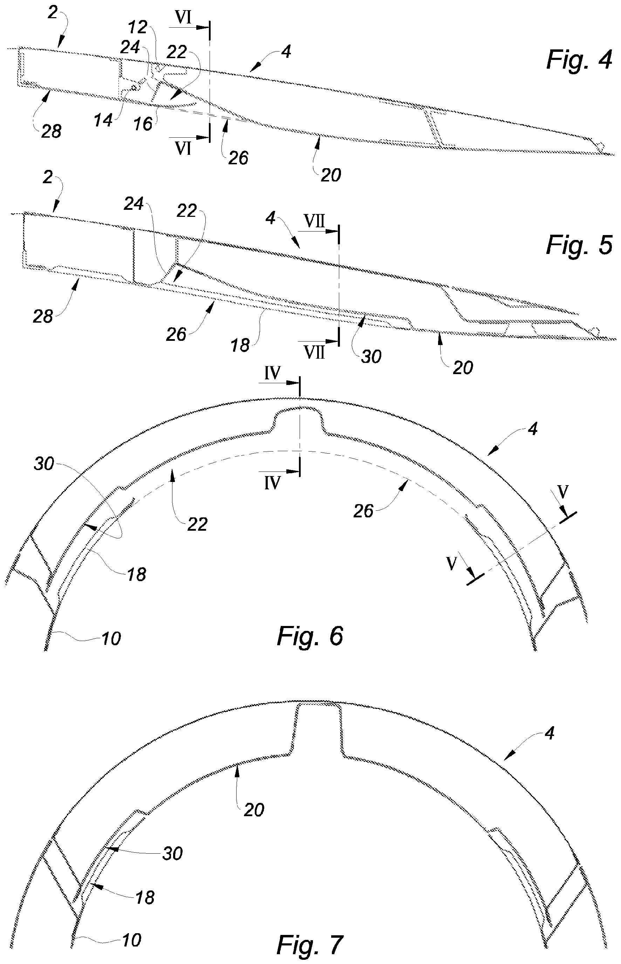

La figure 4 présente la surface interne 20 de la porte 4 qui se trouve globalement dans le prolongement de la surface interne 28 de la structure circulaire 2, suivant une surface théorique continue idéale 26.

Toutefois la surface interne 20 de la porte 4 comporte à l'avant une cavité 22 comprenant un fond droit qui en partant de l'arrière, s'écarte de la surface théorique continue 26 radialement vers l'extérieur, suivant un petit angle.

La cavité 22 se termine vers l'avant par un becquet 24 tourné vers l'axe de la nacelle quand la porte 4 est fermée, et formant un angle droit, qui peut également être compris idéalement entre 70° et 100°, avec le fond de cette cavité, qui est entièrement intégré dans la cavité afin de ne pas dépasser de la surface théorique 26.

Quand la porte 4 est ouverte, le flux de gaz passant par l'ouverture de contre-poussée 8 est dévié vers l'avant notamment par le fond de la cavité 22 et le becquet 24, qui comprennent des formes optimisées pour obtenir une bonne déviation de ce flux.

Le petit angle du fond de la cavité 22 doit être suffisamment faible pour assurer quand la porte 4 est ouverte, un guidage du flux le long de la surface interne 20 de cette porte sans trop de décrochement de ce flux, afin d'obtenir un bon rendement de contre-poussée. D'autre part cet angle doit être suffisamment grand pour avoir un becquet 24 suffisamment long afin d'optimiser la déviation vers l'avant du flux en position portes ouvertes et afin de former une cavité dont la longueur axiale est assez petite, afin de limiter les perturbations du flux direct assurant la propulsion. Avantageusement, ce petit angle est compris entre 10 et 20°.

Le bord de déviation 16 se prolonge vers l'arrière devant la cavité 22 pour la couvrir en grande partie quand la porte 4 est fermée, la partie arrière de ce bord de déviation comprenant après le becquet 24, une courbure progressive tournée radialement vers l'extérieur qui rentre légèrement dans la cavité. Cette courbure arrière a pour but de favoriser l'écoulement des gaz radialement vers l'extérieur par l'ouverture de contre-poussée 8 quand la porte 4 est ouverte, tout en restant assez proche de la surface théorique continue 26 pour ne pas trop perturber le passage du flux direct vers l'arrière.

Dans un plan axial, le profil de la courbure arrière comporte avantageusement une portion d'ellipse, dont le rapport du petit rayon sur le grand rayon est compris entre 0,28 et 0,35.

Les figures 5 à 7 présentent la porte 4 comprenant la cavité 22 et son becquet 24 qui se prolongent vers les deux côtés de cette porte, afin d'obtenir un becquet agissant sur toute la largueur de la porte pour donner la meilleure déviation du flux vers l'avant.

Afin de guider le flux direct de propulsion, la cavité 22 est recouverte de chaque côté de l'ouverture de contre-poussée 8, par le flanc 18 qui se prolonge nettement en arrière de cette cavité. Les flancs 18 constituent des panneaux latéraux qui limitent sur les côtés l'ouverture de contre-poussée 8, et guident le flux vers l'extérieur quand la porte 4 est ouverte.

On notera que suivant l'axe longitudinal, la longueur du flanc 18 représente environ deux fois la largeur de la cavité 22.

Pour intégrer chaque flanc 18 dans la porte 4 afin de réaliser une face interne de ce flanc disposée sensiblement suivant la surface théorique continue 26, la porte comprend une feuillure 30 qui intègre l'épaisseur de ce flanc.

On notera que la coupe transversale présentée figure 6 étant faite au niveau de la cavité 22, les flancs 18 sont espacés du fond de cette cavité, alors que la coupe présentée figure 7 étant faite en arrière de cette cavité, ces flancs se trouvent juste intégrés dans la feuillure, près de la porte 4.

De cette manière on obtient de manière simple et sans mécanisme, un bon rendement pour le flux direct, grâce aux flancs 18 intégrés dans les feuillures 30 qui assurent un guidage de ce flux devant les cavités 22 en les recouvrant, et au profil courbe particulier du bord de déviation 16, et à la longueur réduite de la cavité 22 grâce à la cassure de la surface interne 20 de porte 4 suffisamment en avant de la porte 4. Le rendement du flux inversé est aussi amélioré grâce à un meilleur guidage de ce flux radialement vers l'extérieur par ces flancs 18, et par ce profil de bord de déviation 16.

De plus l'optimisation du guidage du flux inversé à l'aide du bord de déviation 16 permet un bon débit par les ouvertures de contre-poussée 8, qui évite un risque d'endommagement du turboréacteur.

## Revendications

1. Nacelle de turboréacteur comportant un dispositif d'inversion de poussée comprenant des portes (4) qui basculent par rapport à une structure fixe (2) de la nacelle pour freiner le flux de gaz direct en le guidant au travers d'ouvertures de contre-poussée (8) afin de renvoyer ce flux vers l'avant lorsque les portes sont ouvertes, l'intérieur de chaque porte comprenant à l'avant une cavité (22) recevant un becquet (24) tourné vers l'avant quand cette porte est ouverte, la structure fixe (2) en amont de chaque porte (4) supportant un bord de déviation (16) qui recouvre en partie la cavité (22), la structure fixe (2) comportant en outre de chaque côté un bras latéral (10) s'étendant vers l'arrière et supportant un pivot transversal (6) fixant une partie arrière de la porte (4), la nacelle étant **caractérisée en ce que** la structure fixe (2) supporte de chaque côté des ouvertures de contre-poussée (8), un flanc (18) disposé dans la continuation du bord de déviation (16) et se prolongeant en arrière de la cavité (22) à l'intérieur d'un bras latéral 10, ledit flanc (18) étant intégré dans une feuillure (30) de la porte (4) et chaque bord de la porte venant s'ajuster entre le flanc (18) et le bras latéral (10) lorsque ladite porte (4) est fermée, le bord de déviation (16) comportant en outre une courbure tournée radialement vers l'extérieur.

2. Nacelle de turboréacteur selon la revendication 1, **caractérisé en ce que** les faces intérieures des flancs (18) sont disposées sensiblement suivant la surface théorique continue (26) de la veine de flux direct, qui comporte un bon profilage aérodynamique.

3. Nacelle de turboréacteur selon la revendication 1 ou 2, **caractérisé en ce que** suivant l'axe longitudinal de la nacelle, la longueur du flanc (18) représente environ deux fois la largeur de la cavité (22).

4. Nacelle de turboréacteur selon l'une quelconque des revendications précédentes, **caractérisé en ce que** la cavité (22) comporte un fond droit qui en partant de l'arrière, s'écarte de la surface théorique continue (26) radialement vers l'extérieur, suivant un petit angle.

5. Nacelle de turboréacteur selon la revendication 4, **caractérisé en ce que** ce petit angle est compris entre 10 et 20°.

6. Nacelle de turboréacteur selon l'une quelconque des revendications précédentes, **caractérisé en ce que** le bord de déviation (16) comporte une courbure tournée radialement vers l'extérieur, dont le profil dans un plan axial comprend sensiblement une portion d'ellipse.

7. Nacelle de turboréacteur selon la revendication 6, **caractérisé en ce que** le rapport du petit rayon sur le grand rayon de l'ellipse est compris entre 0,28 et 0,35.

## Patentansprüche

1. Turbotriebwerksgondel, welche eine Schubumkehrvorrichtung umfasst, welche Türen (4) aufweist, die im Verhältnis zu einer feststehenden Struktur (2) der Gondel schwenken, um den direkten Gasstrom zu bremsen, indem man ihn durch Gegenschuböffnungen (8) leitet, um diesen Strom nach vorne zurückzuschicken, wenn die Türen offen sind, wobei das Innere einer jeden Tür vorne einen Hohlraum (22) umfasst, der einen Spoiler (24) aufnimmt, der nach vorne gedreht ist, wenn diese Tür offen ist, wobei die feststehende Struktur (2) stromaufwärts einer jeden Tür (4) eine Ablenkkante (16) trägt, die den Hohlraum (22) teilweise abdeckt, wobei die feststehende Struktur (2) weiter auf jeder Seite einen Seitenarm (10) aufweist, der sich nach hinten erstreckt, und ein transversales Drehgelenk (6) trägt, das einen hinteren Abschnitt der Tür (4) fixiert, wobei die Gondel **dadurch gekennzeichnet ist, dass** die feststehende Struktur (2) auf jeder Seite der Gegenschuböffnungen (8) eine Flanke (18) trägt, die in der Fortsetzung der Ablenkkante (16) angeordnet ist, und sich rückwärts von dem Hohlraum (22) im Inneren eines Seitenarms (10) ausdehnt, wobei die Flanke (18) in eine Falz (30) der Tür (4) integriert ist und sich jede Kante der Tür zwischen der Flanke (18) und dem Seitenarm (10) anlegt, wenn die Tür (4) geschlossen ist, wobei die Ablenkkante (16) weiter eine Krümmung aufweist, die radial nach außen gedreht ist.

2. Turbotriebwerksgondel nach Anspruch 1, **dadurch gekennzeichnet, dass** die Innenflächen der Flanken (18) im Wesentlichen entlang der kontinuierlichen theoretischen Oberfläche (26) des direkten Stromkanals angeordnet sind, der eine gute aerodynamische Profilierung aufweist.

3. Turbotriebwerksgondel nach Anspruch 1 oder 2, **dadurch gekennzeichnet, dass** die Länge der Flanke (18) entlang der Längsachse der Gondel etwa zweimal die Breite des Hohlraums (22) darstellt.

4. Turbotriebwerksgondel nach einem der vorstehenden Ansprüche, **dadurch gekennzeichnet, dass** der Hohlraum (22) einen geraden Grund umfasst, der sich von hinten ausgehend von der kontinuierlichen theoretischen Oberfläche (26) entsprechend einem kleinen Winkel radial nach außen absetzt.

5. Turbotriebwerksgondel nach Anspruch 4, **dadurch gekennzeichnet, dass** dieser kleine Winkel zwischen 10 und 20° enthalten ist.

6. Turbotriebwerksgondel nach einem der vorstehenden Ansprüche, **dadurch gekennzeichnet, dass** die Ablenkkante (16) eine radial nach außen gedrehte Krümmung aufweist, deren Profil in einer axialen Ebene im Wesentlichen einen Ellipsenabschnitt umfasst.

7. Turbotriebwerksgondel nach Anspruch 6, **dadurch gekennzeichnet, dass** das Verhältnis des kleinen Radius zum großen Radius der Ellipse zwischen 0,28 und 0,35 enthalten ist.

## Claims

1. A turbojet engine nacelle including an thrust reverser device comprising doors (4) that swing relative to a fixed structure (2) of the nacelle to restrict the direct gas flow by guiding it through counter-thrust apertures (8) in order to return this flow forwards when the doors are open, the inside of each door comprising at the front a cavity (22) receiving a spoiler (24) facing forward when this door is open, the fixed structure (2) upstream of each door (4) supporting a deflection edge (16) which partially covers the cavity (22), the fixed structure (2) further including, on each side, a lateral arm (10) extending rearwardly and supporting a transverse pivot (6) fixing a rear part of the door (4), the nacelle being **characterized in that** the fixed structure (2) supports on each side of the counter-thrust apertures (8), a sidewall (18) disposed in continuation of the deflection edge (16) and extending behind the cavity (22) inside a lateral arm (10), said sidewall (18) being integrated in a rabbet (30) of the door (4) and each edge of the door fitting between the sidewall (18) and the lateral arm (10) when said door (4) is closed, the deflection edge (16) further including a curvature turned radially outwards.

2. The turbojet engine nacelle according to claim 1, **characterized in that** the inner faces of the sidewalls (18) are disposed substantially according to the theoretical continuous surface (26) of the direct flow path, which includes a good aerodynamic profiling.

3. The turbojet engine nacelle according to claim 1 or 2, **characterized in that**, along the longitudinal axis of the nacelle, the length of the sidewall (18) is of about twice the width of the cavity (22).

4. The turbojet engine nacelle according to any one of the preceding claims, **characterized in that** the cavity (22) includes a straight bottom which, starting from the rear, moves away from the theoretical continuous surface (26) radially outwards, at a small angle.

5. The turbojet engine nacelle according to claim 4, **characterized in that** this small angle is comprised between 10 and 20°.

6. The turbojet engine nacelle according to any one of the preceding claims, **characterized in that** the deflection edge (16) includes a curvature turned radially outwards, whose profile in an axial plane comprises substantially an ellipse portion.

7. the turbojet engine nacelle according to claim 6, **characterized in that** the ratio of the small radius to the large radius of the ellipse is comprised between 0.28 and 0.35.
